# EUROPEAN PATENT APPLICATION

(11) **EP 2 544 270 A1**
(43) Date of publication of application: **09.01.2013**
(21) Application number: 11750468.8
(22) Date of filing: 16.02.2011
(51) Int. Cl.: H01M 4/525, H01M 4/505

(54) **POSITIVE ELECTRODE ACTIVE MATERIAL FOR LITHIUM-ION BATTERY, POSITIVE ELECTRODE FOR LITHIUM-ION BATTERY, AND LITHIUM-ION BATTERY**

(30) Priority: 04.03.2010 JP 2010048045
(71) Applicant: JX Nippon Mining & Metals Corporation, Chiyoda-ku Tokyo 100-0004 (JP)
(72) Inventor: SATOH, Hirohito, Kitaibaraki-shi Ibaraki 319-1535 (JP); KAJIYA, Yoshio, Kitaibaraki-shi Ibaraki 319-1535 (JP)
(74) Representative: Yeadon, Mark
(86) International application number: PCT/JP2011/053271
(87) International publication number: WO 2011/108355

(57) **Abstract**

The present invention provides a positive electrode active material for lithium ion batteries having excellent rate performance.

The positive electrode active material for lithium ion batteries having a layered structure is represented by composition formula: Liₓ(Ni_{y}M_{1-y})O_{z}, wherein
M is Mn and Co, x is 0.9 to 1.2, y is 0.6 to 0.9, z is 1.8 to 2.4. D2/D1 is 1.065 or less, D1 being defined as the density of the positive electrode active material when powder of the positive electrode active material is pressed under the pressure of 100MPa, and D2 being defined as the density of the positive electrode active material when powder of the positive electrode active material is pressed under the pressure of 300MPa.

## Description

### TECHNICAL FIELD OF THE INVENTION

The present invention relates to a positive electrode active material for lithium ion batteries, a positive electrode for lithium ion batteries, and a lithium ion battery.

### BACKGROUND OF THE INVENTION

In general, lithium-containing transition metal oxides are used for a positive electrode active material for lithium ion batteries. In particular, they are lithium cobaltate (LiCoO₂), lithium nickelate (LiNiO₂), lithium manganite (LiMn₂O₄) and the like. A conjugation of the lithium-containing transition metal oxides is proceeding in order to improve properties such as high capacity, cycle characteristic, storage characteristic, decreased internal resistance, rate performance, and safety. Lithium ion batteries, for large-size equipment use such as automobile use and load leveling use, require properties different from those of mobile phone use and mobile computer use. Specifically, a high value is placed on excellent rate performance.

Traditionally, various methods have been conducted for improving the rate performance. For example, patent document 1 discloses that the rate performance of a battery can be improved by increasing bulk density and controlling sizes of primary particles and secondary particles in layered lithium-nickel composite oxide powder for lithium secondary battery positive electrode material.

(Patent documents 1) Japanese Patent Application Publication No.2007-214138

### SUMMARY OF THE INVENTION

However, the rate performance is an important property required for a battery, and there is still room for improvement as high-quality positive electrode active material for lithium ion batteries.

The present invention aims to provide a positive electrode active material for lithium ion batteries having excellent rate performance.

The inventor has diligently studied and eventually have found out, there is a close correlation between amount of change for the density of the positive electrode active material by pressing and a rate performance of battery produced by using the material. There are evaluation methods such as bulk density, tap density and press density as the evaluation method for the density, but the density after pressing directly affects a volume of the produced battery because there is actually a pressing step in a manufacturing method for the electrode. In general, the density increases when the pressure increases at pressing. A large change of the density with a change of the pressure means destruction and deformity of particles, and it suggests that strength of the particles is poor. Such particles are likely to be electrochemically unstable. As a result of study based on this standpoint, the inventor has found out, the smaller the amount of change for the density of the positive electrode active material by change of the pressure at pressing, the higher the rate performance of the battery becomes.

The present invention, produced on the basis of the above findings, in one aspect, is a positive electrode active material for lithium ion batteries having a layered structure represented by composition formula: Liₓ(Ni_{y}M_{1-y})O_{z}, wherein M is Mn and Co, x is 0.9 to 1.2, y is 0.6 to 0.9, z is 1.8 to 2.4, and D2/D1 is 1.065 or less, D1 being defined as the density of the positive electrode active material when powder of the positive electrode active material is pressed under the pressure of 100MPa, and D2 being defined as the density of the positive electrode active material when powder of the positive electrode active material is pressed under the pressure of 300MPa.

The present invention is, in one embodiment, the positive electrode active material for lithium ion batteries where D2/D1 is 1.062 or less.

The present invention is, in yet another embodiment, the positive electrode active material for lithium ion batteries, where D2/D1 is 1.060 or less.

The present invention is, in yet another embodiment, the positive electrode active material for lithium ion batteries, where an average particle size of primary particles or secondary particles of the positive electrode active material is 2µm to 8µm.

The present invention, in another aspect, is a positive electrode for lithium ion batteries using the positive electrode active material for lithium ion batteries of the present invention.

The present invention, in yet another aspect, is a lithium ion battery using the positive electrode for lithium ion batteries of the present invention.

### ADVANTAGEOUS EFFECT OF THE INVENTION

The present invention can provide a positive electrode active material for lithium ion batteries having excellent rate performance.

### BRIEF DESCRIPTION OF THE DRAWING

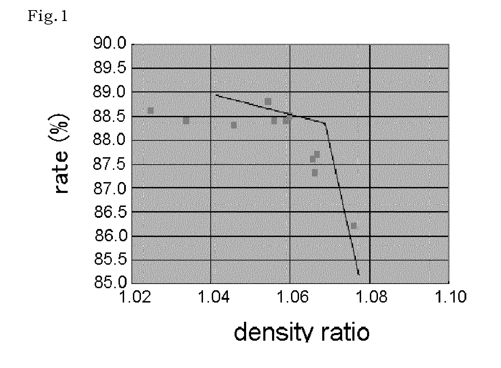

Figure 1 indicates a graph showing a relationship between a density ratio (D2/D1) and a rate performance of working examples 1 to 7 and comparative examples 1 to 4 of Table 1.

### DESCRIPTION OF THE PREFERRED EMBODIMENTS

[Structure of positive electrode active material for lithium ion batteries] As raw materials for positive electrode active material for lithium ion batteries of the present invention, various compounds useful for positive electrode active material for general positive electrode for lithium ion batteries can be used. In particular, it is preferable to use lithium-containing transition metal oxides such as lithium cobaltate (LiCoO₂), lithium nickelate (LiNiO₂) and lithium manganite (LiMn₂O₄). The positive electrode active material for lithium ion batteries of the present invention, produced by using such materials, is represented by composition formula: Liₓ(Ni_{y}M_{1-y})O_{z}, where M is Mn and Co, x is 0.9 to 1.2, y is 0.6 to 0.9, z is 1.8 to 2.4, and has a layered structure.
The lithium ratio to all metal amount in the positive electrode active material for lithium ion batteries is 0.9 to 1.2. This is because it is difficult to maintain stable crystal structure if the ratio is less than 0.9, and excess lithium forms other compounds which do not perform as active materials, and high capacity of the battery cannot be secured if the ratio is more than 1.2.

In the present invention, D1 is defined as the density of the positive electrode active material when powder of the positive electrode active material is pressed under the pressure of 100MPa, and D2 is defined as the density of the positive electrode active material when powder of the positive electrode active material is pressed under the pressure of 300MPa, and then D2/D1 is 1.065 or less. This is because the rate performance deteriorates when D2/D1 is more than 1.065. The density ratio D2/D1 is preferably 1.062 or less, and more preferably 1.060 or less.

The positive electrode active material for lithium ion batteries consists of primary particles, secondary particles formed by aggregation of the primary particles or mixture of the primary particles and the secondary particles. An average particle size of primary particles or secondary particles of the positive electrode active material is preferably 2µm to 8µm.
It is difficult to apply the active material to a current collector when the average particle size is less than 2µm. A void is likely to be generated at filling and then filling property deteriorates when the average particle size is more than 8µm. The average particle size is more preferably 3µm to 6µm.

### [Structures of positive electrode for lithium ion batteries and lithium ion batteries using thereof]

The positive electrode for lithium ion batteries of the present invention has a structure, for example, where the mixture of the positive electrode active material for lithium ion batteries having the aforesaid properties, conductive material and binder, is applied on one surface or both surfaces of a current collector made of aluminum foil and the like. The lithium ion battery of the embodiment of the present invention has the positive electrode for lithium ion batteries having the aforesaid structure.

### [Manufacturing method for positive electrode active material for lithium ion batteries]

Next, manufacturing method for positive electrode active material for lithium ion batteries of the embodiment of the present invention is explained in detail.
First, metal salt solution is produced. The metal is Ni, Co and Mn. The metal salt is sulfate, chloride, nitrate, acetate and the like. In particular, nitrate is preferable because nitrate can be directly calcined and therefore cleaning process can be omitted when nitrate is mixed in raw material for calcination as impurities, and nitrate acts as an oxidant to promote oxidation of metals in the raw material for calcination. Each metal contained in the metal salt is prepared such that it has a desired molar ratio. In this way, molar ratio of each metal in the positive electrode active material is determined.

Next, lithium carbonate is suspended in pure water, and then metal salt solution of the above metal is poured to produce metal carbonate solution slurry. At this time, microparticles of lithium-containing carbonate precipitate in the slurry. When sulfate, chloride and the like are employed as metal salt, the lithium compounds generated in precipitation are not used as lithium raw material at heat treatment, and slurry is cleaned by saturated lithium carbonate solution and then filtered. When nitrate and acetate are employed as metal salt, the lithium compounds generated in precipitation are used as lithium raw material at heat treatment, and slurry is not cleaned but directly filtered. Then they are dried and then they can be used as precursor of calcination.
Next, the filtered lithium-containing carbonate is dried and then powder of lithium salt complex (precursor for positive electrode active material for lithium ion batteries) is provided.

Next, a calcination holder, having a predetermined content, is prepared. Precursor for positive electrode active material for lithium ion batteries is filled in the calcination holder. Next, the calcination holder, filled with powder of precursor for positive electrode active material for lithium ion batteries, is moved to a calcination furnace and then calcined by heat preservation for predetermined time.
After that, the powder is taken from the calcination holder and then powder of positive electrode active material is provided by pulverization.
The positive electrode for lithium ion batteries of the present invention is produced by applying the mixture of aforesaid positive electrode active material for lithium ion batteries, conductive material and binder, on one surface or both surfaces of a current collector made of aluminum foil and the like.
The lithium ion battery of the present invention is produced by using the positive electrode for lithium ion batteries.

### EXAMPLES

Examples of the present invention will be described as follows, but the following examples are provided for better understanding of the present invention and its advantages, and intended to be non-limiting.

### (Working examples 1 to 7 and comparative examples 1 to 4)

At first, lithium carbonate, the amount of which is described in Table 1, was suspended in pure water and then metal salt solution was poured by 1.6L/hour. The metal salt solution was prepared such that Ni:Mn:Co became the composition ratio described in Table 1 with regard to each hydrate of nickel nitrate, cobalt nitrate and manganese nitrate and all molar number of the metals became 14 mol.
Microparticles of lithium-containing carbonate precipitated in the solution by the treatment. Then the precipitate was filtered by using a filter press.
Next, the precipitate was dried and then the lithium-containing carbonate (precursor for positive electrode active material for lithium ion batteries) was produced.
Next, a calcination holder was prepared and then filled with the lithium-containing carbonate. Then the calcination holder was set in a calcination furnace, the temperature was elevated to the calcination temperature described in Table 1 for 6 hours, heat preservation was conducted for 2 hours and then oxides were provided after cooling. Next, the provided oxides were pulverized and then positive electrode active materials for lithium ion batteries were provided.

### [Evaluation]

Contained amounts of Li, Ni, Mn and Co in the positive electrode active material were measured by Inductively Coupled Plasma - Atomic Emission Spectrometer (ICP-AES) and then composition ratio (molar ratio) of each metal was calculated. Further, it was identified by X-ray diffraction that a crystal structure of the material was a layered structure.
Average particle sizes were defined as 50% diameter in particle size distribution by laser diffractometry.
4g of powder of each positive electrode active material was taken and filled in a dice having the diameter of 17.5mm, and pressed by each of the pressure of
24.0kN and 72.2kN. Next, the thickness of the produced pellet was measured. Next, the density of the pellet was calculated, and the density D1 was provided by pressing under 100MPa and the density D2 was provided by pressing under 300MPa, and then D2/D1 was calculated.
The positive electrode active material, an electrical conductive material and a binder were weighed in a proportion of 85:8:7. Next, the positive electrode active material and the electrical conductive material were mixed in an organic solvent (N-methylpyrrolidone) where the binder was dissolved, and thereby slurry was produced. Next, the slurry was applied to aluminum foil, and then a positive electrode was produced by pressing after drying the slurry.
Next, 2032-type coin cell for evaluation, where the negative electrode was Li, was assembled employing an electrolyte where 1M-LiPF₆ was dissolved in EC-DMC(1:1). Then a rate performance was provided calculating a ratio of discharge capacity at current density of 1C to discharge capacity at current density of 0.2C. The results are shown in Talbe 1. Further, Figure 1 indicates a graph showing a relationship between a density ratio (D2/D1) and a rate performance of working examples 1 to 7 and comparative examples 1 to 4 of Table 1.

**Table 1**

| | Li₂CO₃ (g) | composition (%) | | | calcination temperature (°C) | density(g/cm³) | | density ratio (D2/D1) | rate performance (%) | average particle size (*µ*m) |
|---|---|---|---|---|---|---|---|---|---|---|
| | | Ni | Mn | Co | | D1 | D2 | | | |
| working example 1 | 1424 | 65 | 20 | 15 | 860 | 3.234 | 3.343 | 1.034 | 88.4 | 2.5 |
| working example 2 | 1415 | 75 | 15 | 10 | 840 | 3.166 | 3.311 | 1.046 | 88.3 | 2.9 |
| working example 3 | 1415 | 80 | 10 | 10 | 840 | 3.175 | 3.253 | 1.025 | 88.6 | 3.0 |
| working example 4 | 1424 | 65 | 20 | 15 | 850 | 3.188 | 3.366 | 1.056 | 88.4 | 6.8 |
| working example 5 | 1424 | 70 | 15 | 15 | 860 | 3.144 | 3.332 | 1.060 | 88.5 | 2.9 |
| working example 6 | 1443 | 70 | 15 | 15 | 850 | 3.217 | 3.392 | 1.054 | 88.8 | 3.1 |
| working example 7 | 1415 | 80 | 10 | 10 | 830 | 3.112 | 3.295 | 1.059 | 88.4 | 7.1 |
| comparative example 1 | 1415 | 75 | 15 | 10 | 820 | 3.070 | 3.272 | 1.066 | 87.6 | 5.4 |
| comparative example 2 | 1415 | 80 | 10 | 10 | 820 | 3.076 | 3.310 | 1.076 | 86.2 | 6.0 |
| comparative example 3 | 1424 | 70 | 15 | 15 | 830 | 3.161 | 3.372 | 1.067 | 87.7 | 6.9 |
| comparative example 4 | 1424 | 70 | 15 | 15 | 820 | 3.149 | 3.358 | 1.066 | 87.3 | 7.0 |

## Claims

1. A positive electrode active material for lithium ion batteries having a layered structure represented by composition formula: Liₓ(Ni_{y}M_{1-y})O_{z}, wherein
M is Mn and Co, x is 0.9 to 1.2, y is 0.6 to 0.9, z is 1.8 to 2.4, and
D2/D1 is 1.065 or less, D1 being defined as the density of the positive electrode active material when powder of the positive electrode active material is pressed under the pressure of 100MPa, and D2 being defined as the density of the positive electrode active material when powder of the positive electrode active material is pressed under the pressure of 300MPa.

2. The positive electrode active material for lithium ion batteries of claim 1, wherein D2/D1 is 1.062 or less.

3. The positive electrode active material for lithium ion batteries of claim 2, wherein D2/D1 is 1.060 or less.

4. The positive electrode active material for lithium ion batteries of any one of claims 1 to 3, an average particle size of primary particles or secondary particles of the positive electrode active material is 2µm to 8µm.

5. A positive electrode for lithium ion batteries using the positive electrode active material for lithium ion batteries of any one of claims 1 to 4.

6. A lithium ion battery using the positive electrode for lithium ion batteries of claim 5.
